# EUROPEAN PATENT SPECIFICATION

(11) **EP 3 086 693 B1**
(45) Date of publication and mention of the grant of the patent: **17.02.2021**
(21) Application number: 14874578.9
(22) Date of filing: 22.12.2014
(51) Int. Cl.: A47J 31/24, A47J 31/44, A47J 31/46, A47J 31/50, B65D 85/804, A47J 31/40, A47J 31/36, B65D 25/04, B65D 81/32

(54) **DISPENSING INGREDIENTS FROM A BEVERAGE CARTRIDGE**
ABGABE VON INHALTSSTOFFEN AUS EINEM GETRÄNKEBEHÄLTER
DISTRIBUTION D'INGRÉDIENTS À PARTIR D'UNE CARTOUCHE DE BOISSON

(30) Priority: 23.12.2013 US 201361920158 P
(43) Date of publication of application: 02.11.2016
(73) Proprietor: The Coca-Cola Company, Atlanta, GA 30313 (US)
(72) Inventor: RUDICK, Arthur, G., Atlanta, GA 30306 (US); GREEN, C., Brad, Atlanta, GA 30313 (US)
(74) Representative: Dehns
(86) International application number: PCT/US2014/071928
(87) International publication number: WO 2015/100250

(56) References cited:
- EP-A1- 2 100 824
- EP-A1- 2 230 195
- EP-A2- 2 510 805
- WO-A1-2013/066178
- WO-A2-2010/013146
- ES-T3- 2 347 305
- ES-T3- 2 608 669
- US-A1- 2005 095 158
- US-A1- 2009 007 793
- US-A1- 2010 159 077
- US-A1- 2010 159 077
- US-A1- 2012 090 475
- US-A1- 2013 189 400

## Description

### BACKGROUND

Several different types of beverage brewing systems are known in the art. For example, percolators and drip-type coffee makers have been used to make regular or "American"-type coffee. Hot water is generally passed through a container of coffee grinds so as to brew the coffee. The coffee then drips into a pot or a cup. Likewise, pressure -based devices have been used to make espresso-type beverages. Hot, pressurized water may be forced through the espresso grinds so as to brew the espresso. The espresso may then flow into the cup.

Various beverage brewing systems use beverage pods to dispense individual servings quickly and conveniently. The single serving beverage brewing pods are popular and typically comprise a sealed container having a top surface, a bottom surface and a filter. Some other pods may be used for preparing beverages or other food products which contain a water soluble substance. The water soluble substance may be a liquid or powdered ingredient for making a beverage such as coffee, tea or soup, fruit juice and desserts. Relevant state of the art documents relating to this subject-matter are, for example: EP 2,230,295, EP 2,510,805, WO 2013/066178, US 2010/159077, and EP 2,100,824.

### SUMMARY

In general terms, this disclosure is directed to a method and apparatus for operating an automated dispenser to dispense hot brewed beverages, cold still beverages, and/or cold carbonated beverages using pods with similar external geometries. According to the invention, the cartridge includes a plurality of storage compartments stacked in series within an interior of the cartridge. Each of the plurality of storage compartments includes an inlet port, an outlet port opposite the inlet port, an ingredient contained between the inlet and outlet ports, and a seal covering the inlet and outlet ports. The cartridge can be configured to allow a transfer medium to rupture the seal of each of the storage compartments and to enter the inlet port to dilute the ingredient in each storage compartment in series and to discharge the diluted ingredients out of the cartridge.

Another aspect of the invention relates to a beverage dispenser including a cartridge having a plurality of storage compartments stacked on top of one another. Each of the plurality of storage compartments include an inlet port; an outlet port opposite the inlet port; an ingredient contained between the inlet and outlet ports; and a seal covering the inlet and outlet ports. The cartridge can be configured to allow a transfer medium to rupture the seal of each of the storage compartments and to enter the inlet port to dilute the ingredient in each storage compartment in series and to discharge the diluted ingredients out of the cartridge. The beverage dispenser further includes a turret including a first station for dispensing a carbonated beverage from a cartridge that has been inserted into the beverage dispenser; a first dispensing head and a second dispensing head adjacent to the first dispensing head. The first and second dispensing heads are arranged and configured to move laterally such that one of the first and second dispensing heads is positioned over the first dispensing station for dispensing therefrom.

### DESCRIPTION OF THE DRAWINGS

FIG. 1 is a perspective view of an example beverage dispenser in accordance with the principles of the present disclosure.
FIG. 2 is schematic top plan view of an example beverage dispenser configured to dispense coffee in accordance with the principles of the present disclosure.
FIG. 2A is a cross-sectional view of a portion of the beverage dispenser shown in FIG. 2 taken along line 2A-2A.
FIG. 3 is a schematic top plan view of the example beverage cooling system shown in FIG. 2 configured to dispense carbonated soft drinks (CSDs).
FIG. 3A is a cross-sectional view of a portion of the beverage dispenser shown in FIG. 3 taken along line 3A-3A.
FIG. 3b is a schematic view of an example control system for the beverage dispenser of FIG. 1.
FIG. 4 is a schematic top plan view of a turret having two dispensing heads in accordance with the principles of the present disclosure.
FIG. 5 is a schematic of a fluidic diagram for dispensing CSD pods in series in accordance with the principles of the present disclosure.
FIG. 5a is a schematic of another fluidic diagram for dispensing CSD pods.
FIG. 6 is a cut away view of an example beverage pod cartridge in accordance with the principles of the present disclosure.
FIG. 7 is a schematic side view of an example of a pod with three storage compartments and an add-on pod in series in accordance with the principles of the present disclosure.
FIG. 8 is a cross-section of a pod with an add-on pod in series in accordance with the principles of the present disclosure.

### DETAILED DESCRIPTION

Various embodiments will be described in detail with reference to the drawings, wherein like reference numerals represent like parts and assemblies throughout the several views. Reference to various embodiments does not limit the scope of the claims attached hereto. Additionally, any examples set forth in this specification are not intended to be limiting and merely set forth some of the many possible embodiments for the appended claims.

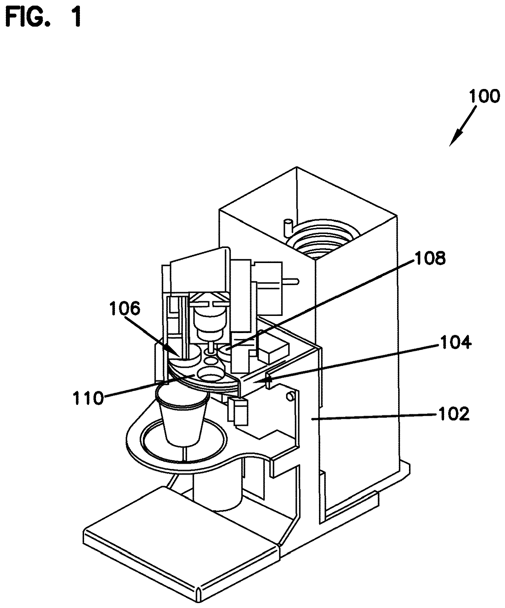

FIG. 1 is a perspective view of an example pod beverage dispenser 100 having a single dispensing head. The pod beverage dispenser 100 can be configured to dispense beverages using pods that have been inserted into the pod beverage dispenser 100. The elements of the example pod beverage dispenser 100 as a whole are mounted onto a dispenser frame 102. The dispenser frame 102 may be made out of stainless steel, aluminum, other types of metals, or other types of substantially non-corrosive materials. The beverage dispenser 100 may include a control system (not shown), a turret assembly 104, a dispensing station 106, an ejector assembly 108, and a loading assembly 110. The control system controls the flow of diluent within the beverage dispenser 100. The control system may also be used to control the flow of carbon dioxide within the beverage dispenser 100. An example of one control system, injector assembly, ejector assembly, and loading assembly is disclosed in U.S. Pat. Pub. No. 2005/0095158 A1.

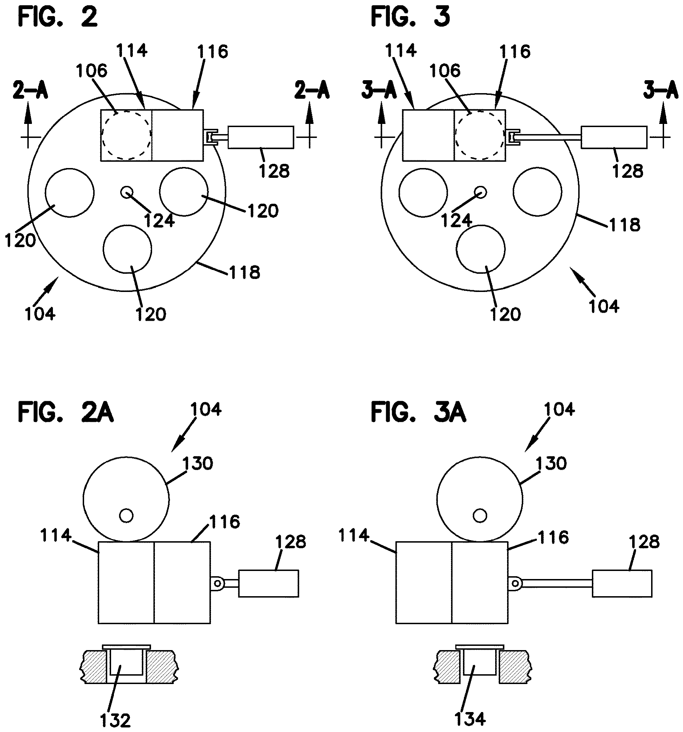

FIG. 2 illustrates details of the example turret assembly 104. In this example, a double head dispenser is shown.

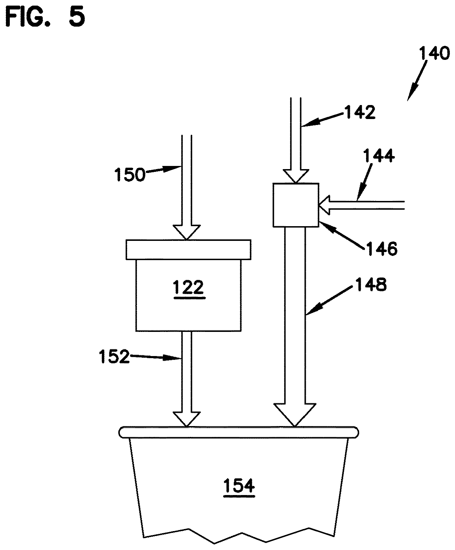

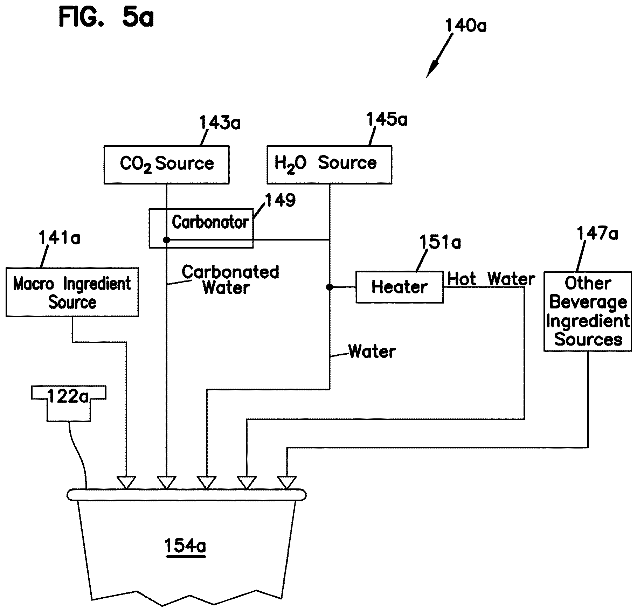

FIG. 2 is a top plan view of the example turret assembly 104. The example turret assembly 104 includes a hot beverage dispensing head 114 (e.g., coffee or tea) and a cold beverage dispensing head 116 (e.g., a carbonated soft drink (CSD)). It is to be understood that the hot beverage dispensing head 114 may be used to dispense any hot beverage and the cold beverage dispensing head 116 may be used to dispense any cold beverage. For example, the hot beverage dispensing head 114 may be configured to dispense hot water, hot milk, and/or other hot fluids through a beverage pod so as to dispense a hot beverage. Likewise, the cold beverage dispensing head 116 may be configured to dispense cold water, cold carbonated water, and/or other cold fluids through a beverage pod so as to dispense a cold beverage. The turret assembly 104 includes a turret plate 118. In this example, the turret assembly 104 is substantially circular. The turret plate 118 of the turret assembly 104 defines a plurality of apertures 120 for receiving a pod 122 (see FIG. 5). The turret assembly 104 includes a turret shaft 124 positioned and fixed about the center of the turret plate 118 such that the turret plate 118 may spin thereon.

The turret assembly 104 includes the example dispensing station 106 (see FIG. 1). It is understood that the arrangement and configuration of the example dispensing station 106 may vary in other embodiments. The example dispensing station 106 is a single dispensing station arranged and configured to dispense beverages via both the hot beverage dispensing head 114 and the cold beverage dispensing head 116. The hot beverage dispensing head 114 and the cold beverage dispensing head 116 can slide side-to-side so that either the hot beverage dispensing head 114 or the cold beverage dispensing head 116 is centered over the dispensing station 106. As shown in FIG. 2, the example dispensing station 106 is configured to receive hot fluids from the hot beverage dispensing head 114 such that the pod beverage dispenser 100 dispenses a hot beverage.

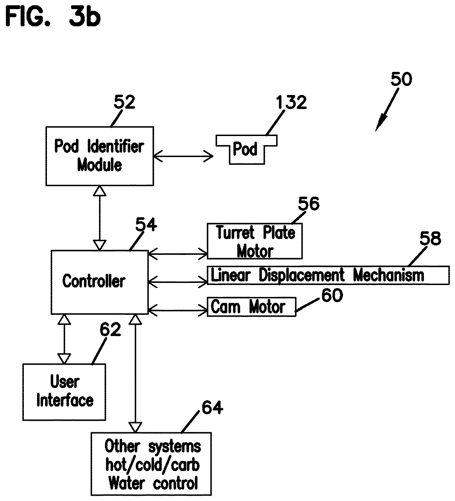

Referring to FIG. 3, the example single dispensing station 106 of the turret assembly 104 is shown configured to receive cold fluids from the cold beverage dispensing head 116 such that the pod beverage dispenser 100 dispenses a cold beverage. The linear displacement mechanism laterally moves the hot beverage dispensing head 114 and the cold beverage dispensing head 116 side-to-side is well known in the art. In this example, a pneumatic cylinder 128 is shown as providing the motive force. It is to be understood that any similar linear motion device may be used.

Referring to FIG. 2A, a cross-sectional view of a portion of the beverage dispenser shown in FIG. 2 taken along line 2A-2A is depicted which includes a cam 130 and a hot beverage pod 132. The hot beverage dispensing head 114 may operate in any orientation. In this example, the hot beverage dispensing head 114 is moved in position such that a hot beverage is dispensed from the pod beverage dispenser 100. The hot beverage pod 132 can include a brewable material such as coffee grounds, tea leaves, or the like or the hot beverage pod 132 can include a hot beverage concentrate such as a liquid concentrate, a powder, freeze-dried crystals, or the like. The hot beverage concentrate may be made from a previously brewed beverage or brewed beverage concentrate. Hot water or other hot fluids may be dispensed from the hot beverage dispensing head 114 through the hot beverage pod 132 to dispense a hot beverage, such as, but not limited to, a coffee, tea, etc.

Referring to FIG. 3A, a cross-sectional view of a portion of the beverage dispenser shown in FIG. 3 taken along line 3A-3A is depicted which includes the cam 130 and a cold beverage pod 134. In this example, the cold beverage dispensing head 116 is in position such that a cold beverage is dispensed from the pod beverage dispenser 100. The cold beverage dispensing head 116 may operate in any orientation. The cold beverage pod 134 can include liquid concentrate or powder for forming a non-carbonated or carbonated beverage. Cold water, cold carbonated water, or other cold fluids may be dispensed from the cold beverage dispensing head 116 through the cold beverage pod 134 to dispense a cold beverage, such as, but not limited to a juice, a tea, a soft drink, etc.

The cam 130 is a rotating or sliding piece in a mechanical linkage used to transform rotary motion into linear motion or vice-versa. In this example, the cam 130 is used to translate the dispensing head 114 towards and away from the pods. For example, upon rotating the cam 130 180 degrees, the dispensing head 114 is lowered onto the pod at the dispensing station with sufficient force so as to form a sealing engagement between the dispensing head 114 and the pod.

A cam motor may drive the cam 130. The cam motor may be a conventional AC motor or a similar type of device. In alternative designs, the cam can be replaced with other mechanisms that provide linear actuation, such as a pneumatic cylinder or a rack and pinion mechanism.

The beverage dispenser 100 may be configured to identify the type of pod 122 being inserted into the turret assembly 104. The configuration can include detecting a machine readable element on each pod, such as, but not limited to, a radiofrequency identification tag (RFID), that corresponds to a reading device in the beverage dispenser 100. In other examples the recognition system can includes barcodes, magnetic strips, optical recognition, microchips, and the like, including combinations thereof. In certain examples, the method for recognition may include physical obstructions, such as, but not limited to, voids, bumps, ridges, holes, recesses, protrusions, and the like, including combinations thereof.

In certain examples, upon insertion of the hot beverage pod 132 into the turret assembly 104, the hot beverage dispensing head 114 would automatically index to the dispensing station 106. Likewise, upon insertion of the cold beverage pod 134 into the turret assembly 104, the cold beverage dispensing head 116 would automatically index to the dispensing station 106. In this example, the user does not have to specify the type of pod 122 being inserted in the turret assembly 104 of the beverage dispenser 100 because all of the information regarding the pod type, ingredients therein, number of compartments within the pod, etc. will be recognized by the identification system. The pod 122 can be arranged and configured to be used within any type of pod beverage dispenser.

Referring to FIG. 3b, an example control system 50 for the pod beverage dispenser 100 is illustrated. Once a consumer places the hot beverage pod 132 into the turret assembly 104, a pod identifier module 52 can detect the type of beverage pod inserted in the turret assembly 104. As described above, the pod identifier module 52 may be a machine reader for reading one or more of an RFID tag, barcode, magnetic strip, optical symbol, microchip, and the like, such as, but not limited to, an RFID reader, a barcode reader, a magnetic strip reader, an optical sensor, or a microchip interface. An electronic controller 54 may monitor and control the operation of the pod beverage dispenser 100 as a whole and each of the components therein. The electronic controller 54 may be a microcontroller or a similar type of device. Once the identification of the hot beverage pod 132 is made, the electronic controller 54 may operate a turret plate motor 56, a linear displacement mechanism 58, and a cam motor 60. The correct pod compartment of the turret plate 118 may rotate into place and the hot beverage pod 132 may be dropped into the correct turret aperture 120 for the turret assembly 104.

In certain examples, the electronic controller 54 may be integrated with a user interface 62. In some embodiments, the user interface 62 may receive input from a consumer to identify the type of beverage pod inserted in the turret assembly 104. For example, the user interface 62 may receive selections of a pod on a user input screen or receive product code information provided on the pod packaging. In other examples, the electronic controller 54 may be integrated with other systems 64 (e.g. hot/cold/carbonated/ water controls) for automatic dispensing.

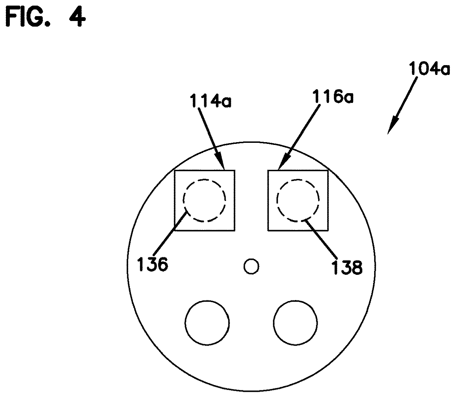

Referring to FIG. 4, an example alternative embodiment of a turret assembly 104a arranged and configured with two dispensing stations is illustrated. It is understood that the configuration of the two dispensing stations may vary in other embodiments.

In one example, the turret assembly 104a includes a first dispensing station 136 and a second dispensing station 138 for dispensing from a hot beverage dispensing head 114a and a cold beverage dispensing head 116a respectively. In other words, the first dispensing station 136 is dedicated to coffee or any hot beverage and the second dispensing station 138 is dedicated to any cold beverage. The hot beverage dispensing head 114a is positioned above the first dispensing station 136 and the cold beverage dispensing head 116a is positioned above the second dispensing station 138. Upon insertion of a hot beverage pod 132a the turret assembly 104a automatically indexes the hot beverage pod 132a to the first dispensing station 136 by rotating the turret plate 118 90°, for example. Similarly, upon insertion of a cold beverage pod 134a into the turret assembly 104a, the turret assembly 104a automatically indexes the cold beverage pod 134a to the second dispensing station 138 by rotating the turret plate 118 180°, for example. As described above, the control system 50 and a method for recognizing the type of pod inserted in the turret assembly 104a can be used. With two dispensing stations, the linear displacement mechanism 58 may not be present because the dispensing heads 114a, 116a may be laterally fixed over their respective dispensing stations 136, 138.

Referring to FIG. 5, a schematic of an example fluidic diagram 140 is illustrated for dispensing a beverage from the cold beverage pod 134.

The example fluidic diagram 140 includes a first diluent stream 142, a macro-ingredient stream 144, a mixing device 146, a mixed stream 148 exiting the mixing device 146, a second diluent stream 150 (e.g., ingredient transfer medium) entering the pod 122, and an ingredients stream 152 exiting the pod 122.

The macro-ingredient stream 144 typically has a viscosity and density much different from common diluents and must be thoroughly mixed to prevent stratification. In some embodiments, the macro-ingredient stream 144 may be a nutritive sweetener, such as, high fructose corn syrup (HFCS), liquid sucrose, an inverted sugar, or other such sweeteners. In some embodiments, the macro-ingredient stream 144 may be a non-sweetener beverage ingredient. The mixing device 146 can be a conventional dispensing nozzle well known to those in the art. The mixed stream 148 contains a mixture of the first diluent and the macro-ingredient stream 144 that is dispensed into a cup 154. The first diluent may be water, carbonated water, or other beverage diluents.

In one example, carbon dioxide (CO₂) gas is routed to the pod 122 to act as the ingredient transfer medium 150 to transfer the ingredients out of the pod 122 into the cup 154. The ingredients in the pod 122 can have a viscosity and density similarly to common diluents and may not be prone to stratification. In some embodiments, the ingredients in the pod 122 may include one or more beverage micro-ingredient. In some embodiments, the ingredients may be un-sweetened beverage ingredients, such as an unsweetened beverage micro-ingredient. The mixed stream 148 and the ingredients stream 152 dispensing in the cup 154 are parallel to each other.

In other embodiments, the mixed stream 148 and the ingredients stream 152 may be in one stream. In some examples, the ingredient transfer medium 150 may not be CO₂. In such examples, the mixed stream 148 of diluent and the macro-ingredient stream 144 are routed through the pod 122 and becomes the ingredient transfer medium 150 to dispense the ingredients from the pod 122.

In still other embodiments, the fluidic diagram 140 may include a secondary diluent stream that branches off the diluent stream 142 upstream or downstream of the mixing device 146. The secondary diluent stream may be used as the ingredient transfer medium 150.

Referring to FIG. 5a, another example of an example fluidic diagram 140a is illustrated for dispensing a beverage. In the illustration, the fluidic diagram 140a includes a pod 122a, a macro ingredient source 141a, a CO₂ source 143 a, a H₂O source 145a, and other beverage ingredient sources 147a. In the depicted illustration, ingredients from the pod 122a are being dispensed into a cup 154a. The CO₂ source 143a has a carbonator 149a that is used to generate carbonated water that is dispensed into the cup 154a. In some embodiments, the CO₂ source 143a may have a removable CO₂ cylinder. In one example, the H₂O source 145a includes a heater 151a for generating hot water that can be dispensed in the cup 154a. In some embodiments, the water source 145a may include a removable water reservoir or a water supply line. Water that does not undergo heating from the heater 151a may also be dispensed into the cup 154a. In certain examples, other ingredient sources 147a (e.g., juice, dairy, milk, yogurt, etc.) may be dispensed to the cup 154a.

Ingredients that can be used in pods of the pod beverage dispenser 100 include: traditional beverage syrup (nutritive or non-nutritive sweetened), un-sweetened beverage concentrate, un-sweetened beverage micro-ingredient, un-sweetened acid and acid-degradable beverage flavor components, non-nutritive or high-intensity sweetener can be included in the acid-degradable flavor component. It is to be appreciated that other ingredient scenarios may be possible.

Various dispensing scenarios can be accomplished using the beverage dispensers and pods described herein. For example, one or more of the dispensing mechanisms described herein can be used to dispense either hot beverages (e.g., coffee, tea) or cold beverages (e.g., carbonated soft drinks). The pods used to accomplish both the hot and cold beverages can be similar in external geometries to allow for ease in the insertion into the beverage dispensers.

Further, the pods can be arranged in both serial (i.e., co-linearly) and parallel (i.e., perpendicularly or radially) configurations to accomplish different dispensing scenarios, as needed. In addition, add-on flavors can be arranged in series or parallel to increase the number of beverage dispensing choices. In addition, the pods can be used to deliver a macro ingredient or syrup, which is a beverage ingredient with a reconstitution ratio might be somewhere between 06:01 to 10:01.

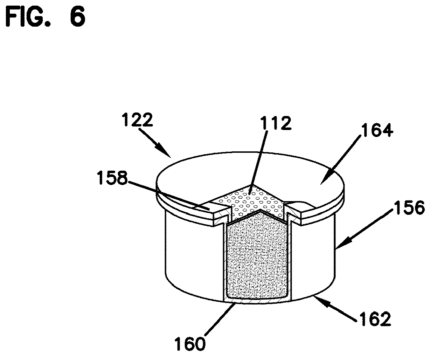

Referring to FIG. 6, one example embodiment of the pod 122 is illustrated. The pod 122 can include a cup 156, an insert 158, a filter layer 160, a bottom seal 162, and a top seal 164. Further details about an example pod are disclosed at U.S. Patent Publication No. 2005/0095158 A1.

The cup 156 can be made out of a conventional thermoplastic such as polystyrene or polyethylene. It will be appreciated that the cup 156 can be made out of metal, such as, but not limited stainless steel, or similar types of substantially noncorrosive materials.

The insert 158 encloses the top of the cup 156. The insert 158 may be made out of a thermoplastic or a similar material as is used for the cup 156. The insert 158 defines a plurality of apertures 112 such that in use fluid passes over and through the apertures 112 into the cup 156. In other examples, the pod may not include the insert 158 such that fluid flows directly into the cup 156 from the top of the pod 122.

The top seal 164 encloses the cup 156 to provide an airtight seal for the ingredients contained within the pod 122. The top seal 164 can be made out of a foil or similar type of substantially airtight material.

The bottom seal 162 is arranged and configured to enclose the bottom end of the cup 156. The bottom seal 162 may include the filter layer 160. The bottom seal 162 can be made out of foil or similar material as is used for the top seal 164. The top and bottom seals 162, 164 may keep the ingredients within the pod 122 in a substantially airtight manner for freshness purposes. The filter layer 160 may be made out of a paper filter material or similar types of material. In other examples, the pod 122 may not include the filter layer 160.

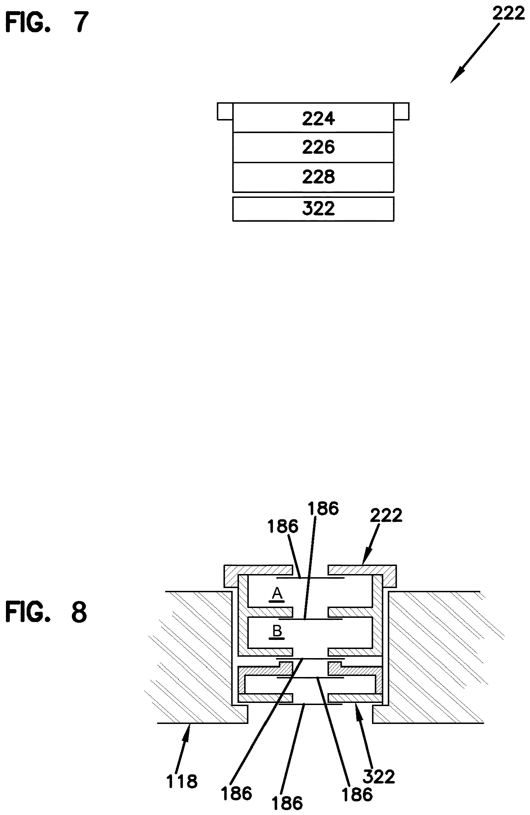

The pod 122 is arranged and configured with various storage compartments that can each include an ingredient. The storage compartments of the pod 122 are constructed in a series configuration. In a series configuration (see FIGs. 7-8), the ingredients are stored in the pod so that the diluent generally dilutes each ingredient sequentially. Other configurations are possible, such as pods having both parallel and series configurations.

The pod 122 may be filled with various combinations of ingredients. A few of the various ingredients used in the pods 122 are macro ingredients, such as non-nutritive sweetener or nutritive sweetener (i.e. sugar syrup or HFCS). The macro-ingredient can have a reconstitution ratio of less than 10:1. In some examples, the macro-ingredient may have a reconstitution ratio between about 3:1 to about 6:1. The pods 122 can also include micro ingredients, such as, natural and artificial flavors, natural an artificial colors, and acid and non-acid components of flavoring. The micro-ingredient can have a reconstitution ratio greater than or equal to 10:1. These ingredients may include acids, flavors and high-intensity or non-nutritive sweeteners. It will be appreciated that any number of ingredient combinations can be used in pods 122 along with multiple compartment configurations.

Referring to FIG. 7, an example pod 222 is shown with ingredient storage compartments arranged and configured in series. The example pod 222 is a multi-ingredient pod that can be arranged co-linearly with a diluent flow so as to discharge the ingredients contained in the compartments sequentially. In the illustrated example, there is a first ingredient storage compartment 224, a second storage ingredient compartment 226, and a third ingredient storage compartment 228 stacked together one on top of the other. It will be appreciated that the pod 222 can include any number of ingredient storage compartments.

In one example, the example pod 222 can be a cold beverage type pod having ingredient storage compartments 224, 226, 228. The ingredient storage compartments 224, 226, 228 can include macro-ingredients, such as non-nutritive sweetener or nutritive sweetener (i.e. sugar syrup or HFCS). The ingredient storage compartments 224, 226, 228 can also include micro ingredients, such as, natural and artificial flavors, natural an artificial colors, and acid and non-acid components of flavoring. A diluent such as CO₂ or water can be used to transfer the ingredients out of the pod 222. In other examples, the diluent may include a sweetener, acid flavor components, or non-acid flavor components.

In one example, the example pod 222 can include an add-on flavor pod 322. The add-on flavor pod 322 is added serially to the example pod 222. The add-on flavor pod 322 can include flavors such as, but not limited to, cherry, vanilla, or raspberry. The add-on flavor can be mixed with the main ingredients in the pod 222 to create a flavored beverage.

Referring to FIG. 8, the example pod 222 and the add-on flavor pod 322 are illustrated in the turret plate 118. The turret plate 118 may include a number of apertures 120 therein. The apertures 120 may be sized to accommodate the pod 122. An example turret assembly and turret plate is disclosed at U.S. Patent Publication No. 2005/0095158 A1. As shown, the example pod 222 includes two ingredient storage compartments A, B. The ingredient storage compartments A, B are separated by the rupturable membrane 186. The rupturable membrane 186 separates the ingredients within each compartment A, B until dispensing. It will be appreciated that the pod 222 may include any number of ingredient storage compartments. In one example, the add-on flavor pod 322 can be inserted in the turret plate 118 first followed by the pod 222 for a carbonated soft drink. In such situations, the add-on flavor pod 322 and the pod 222 are stacked one on top of the other. Rupturable membranes 186 are used to seal the inlet and outlet ports of the pod 222 and inlet and outlet ports of the add-on flavor pod 322. When a dispensing head is placed on the pod 222, pressure from a diluent stream causes the rupturable membranes 186 of the pod 222 and add-on flavor pod 322 to break allowing the ingredients in each pod 222, 322 to flow therefrom into a cup.

In other examples, the add-on flavor pod 322 may not be included. The add-on flavor may be included in the pod 222 as a separate ingredient storage compartment. Thus, it is not necessary to include multiple pods that are stacked together in series because a single pod can be configured to include a multiple number of ingredient storage compartments.

When the cold beverage dispensing head 116 lowers onto the pod 222, the tube containing the transfer medium (i.e. diluent) creates a seal against a first inlet port of the pod 222. The downward force generated by the cold beverage dispensing head 116 also seals a first outlet port of the pod 222 to an inlet port of the add-on flavor pod 322. The add-on flavor pod 322 can become an additional internal chamber associated with the pod 222 and can function as such during dispensing.

## Claims

1. A cartridge (222) for use in a beverage dispenser (100), **characterized in that** the cartridge (222) comprises:
a plurality of storage compartments (224, 226, 228) stacked in series within an interior of the cartridge (222), each of the plurality of storage compartments (222) including: an inlet port, an outlet port opposite the inlet port, an ingredient contained between the inlet and outlet ports, and a seal (186) covering the inlet and outlet ports;
wherein the cartridge (222) is configured to allow a transfer medium to rupture the seal (186) of each of the storage compartments (224, 226, 228) and to enter the inlet port to dilute the ingredient in each of the plurality of storage compartments (224, 226, 228) in series and to discharge the diluted ingredients out of the cartridge (222).

2. The cartridge (222) of claim 1, wherein:
the seal (186) is a rupturable membrane; or
the seal (186) is a shuttle valve.

3. The cartridge (222) of claim 1, wherein the transfer medium is a diluent stream;
preferably wherein a flowing beverage formed by interaction of the diluent stream with the ingredient contained in each of the plurality of storage compartments (224, 226, 228) flows through to the outlet port.

4. The cartridge (222) of claim 1, further comprising an add-on cartridge (322) in series; and/or
wherein the ingredient in one of the plurality of storage compartments (224, 226, 228) is selected from a group consisting of: high fructose corn syrup, non-nutritive sweetener, artificial flavors, acids, natural flavors, and mixtures thereof; and/or
wherein the plurality of storage compartments (224, 226, 228) are separated by internal dividers.

5. The cartridge (222) of claim 1, further comprising an identification signal to identify a type of beverage being dispensed;
wherein the identification signal preferably includes one or more of a RFID tag, barcodes, magnetic strips, optical recognition, microchips, and combinations thereof.

6. A beverage dispenser (100) comprising:
a cartridge (222) according to claim 1, wherein the plurality of storage compartments (224, 226, 228) are stacked on top of one another;
a turret (104) including a first station (106) for dispensing the cartridge (222);
a first dispensing head (114); and
a second dispensing head (116) adjacent to the first dispensing head (114);
wherein the first and second dispensing heads (114, 116) are arranged and configured to move laterally such that one of the first and second dispensing heads (114, 116) is positioned over the first dispensing station (106) for dispensing therefrom.

7. The beverage dispenser (100) of claim 6, further comprising a second dispensing station (138).

8. The beverage (100) dispenser of claim 7, wherein the first dispensing head (114a) is positioned over the first dispensing station (136) for dispensing therefrom, and the second dispensing head (116a) is positioned over the second dispensing station (138) for dispensing therefrom.

9. The beverage dispenser (100) of claim 7, wherein the first dispensing head (114) dispenses hot beverages and the second dispensing head (116) dispenses cold beverages.

10. The beverage dispenser (100) of claim 9, wherein:
the hot beverages are coffee or tea; and/or
the cold beverages are carbonated soft drinks.

11. The beverage dispenser (100) of claim 7, wherein the cartridge (222) further comprises an identification signal to identify a type of cartridge (222) being dispensed, such that the turret (104) indexes the cartridge (222) to the corresponding first or the second dispensing station (136, 138); and
wherein the identification signal preferably includes one or more of a RFID tag, barcodes, magnetic strips, optical recognition, microchips, and combinations thereof.

12. The beverage dispenser (100) of claim 6, further comprising a mixing device (146), a first diluent stream (142), and a nutritive sweetener stream (144), wherein the first diluent stream (142) and the nutritive sweetener stream (144) are mixed together in the mixing device (146) forming a transfer medium.

13. The beverage dispenser (100) of claim 12, wherein:
the mixing device (146) is a dispensing nozzle; and/or
the transfer medium is used to transfer the ingredient within each of the plurality of storage compartments (224, 226, 228) out of the cartridge (222) thereof to form a beverage.

14. The beverage dispenser (100) of claim 12, further comprising a second diluent stream (150) branching off the first diluent stream (142), wherein the second diluent stream (142) transfers the ingredient within each of the plurality of storage compartments (224, 226, 228) out of the cartridge (222) into a cup;
wherein the transfer medium preferably mixes with the second diluent stream (150) in the cup to form a beverage.

15. The beverage dispenser (100) of claim 6, wherein the storage compartments (224, 226, 228) of the cartridge (222) are positioned both in series and in parallel; and/or
further comprising a plurality of cartridges (222) positioned in series.

## Patentansprüche

1. Kartusche (222) zur Verwendung in einer Getränkeabgabevorrichtung (100), **dadurch gekennzeichnet, dass** die Kartusche (222) umfasst:
eine Vielzahl von Speicherkammern (224, 226, 228), die in Reihe in einem Innenraum der Kartusche (222) gestapelt sind, wobei jede der Vielzahl von Speicherkammern (222) enthält: eine Einlassöffnung, eine der Einlassöffnung gegenüberliegende Auslassöffnung, einen zwischen der Einlass- und der Auslassöffnung enthaltenen Inhaltsstoff, und eine die Einlass- und die Auslassöffnung abdeckende Dichtung (186) ;
wobei die Kartusche (222) dazu ausgelegt ist, einem Übertragungsmedium zu ermöglichen, die Dichtung (186) jeder der Speicherkammern (224, 226, 228) aufzureißen und in den Einlassanschluss einzutreten, um den Inhaltsstoff in jedem der Vielzahl von Speicherkammern (224, 226, 228) in Reihe zu verdünnen und die verdünnten Inhaltsstoffe aus der Kartusche (222) auszutragen.

2. Kartusche (222) gemäß Anspruch 1, wobei:
die Dichtung (186) eine aufreißbare Membran ist; oder
die Dichtung (186) ein Wechselventil ist.

3. Kartusche (222) gemäß Anspruch 1, wobei das Übertragungsmedium ein Verdünnungsmittel ist, wobei vorzugsweise ein fließendes Getränk, das durch Wechselwirkung des Verdünnungsmittelstroms mit dem in jeder der Vielzahl von Speicherkammern (224, 226, 228) enthaltenen Inhaltsstoff gebildet wird, durch die Auslassöffnung fließt.

4. Kartusche (222) gemäß Anspruch 1, ferner umfassend eine Zusatzkartusche (322) in Reihe; und/oder
wobei der Inhaltsstoff in einer der Vielzahl von Speicherkammern (224, 226, 228) ausgewählt ist aus einer Gruppe bestehend aus: Maissirup mit hohem Fruktosegehalt, nicht-nährendem Süßstoff, künstlichen Aromen, Säuren, natürlichen Aromen und Mischungen davon; und/oder
wobei die Vielzahl von Speicherkammern (224, 226, 228) durch innere Trennwände getrennt sind.

5. Kartusche (222) gemäß Anspruch 1, ferner umfassend ein Identifikationssignal zum Identifizieren einer abgegebenen Getränkeart;
wobei das Identifikationssignal vorzugsweise eines oder mehrere von einem RFID-Kennzeichen, Strichcodes, Magnetstreifen, optischer Erkennung, Mikrochips und Kombinationen davon beinhaltet.

6. Getränkeabgabevorrichtung (100), umfassend:
eine Kartusche (222) gemäß Anspruch 1, wobei die Vielzahl von Speicherkammern (224, 226, 228) übereinander gestapelt sind;
einen Revolverkopf (104), der eine erste Station (106) zum Ausgeben der Kartusche (222) enthält;
einen ersten Abgabekopf (114); und
einen zweiten Abgabekopf (116) angrenzend an den ersten Abgabekopf (114);
wobei der erste und der zweite Abgabekopf (114, 116) dazu angeordnet und ausgelegt sind, sich seitlich so zu bewegen, dass einer des ersten und des zweiten Abgabekopfes (114, 116) über der ersten Abgabestation (106) positioniert wird, um daraus abzugeben.

7. Getränkeabgabevorrichtung (100) gemäß Anspruch 6, ferner umfassend eine zweite Abgabestation (138).

8. Getränkeabgabevorrichtung (100) gemäß Anspruch 7, wobei der erste Abgabekopf (114a) über der ersten Abgabestation (136) positioniert ist, um daraus abzugeben, und der zweite Abgabekopf (116a) über der zweiten Abgabestation (138) positioniert ist, um daraus abzugeben.

9. Getränkeabgabevorrichtung (100) gemäß Anspruch 7, wobei der erste Abgabekopf (114) Heißgetränke abgibt und der zweite Abgabekopf (116) Kaltgetränke abgibt.

10. Getränkeabgabevorrichtung (100) gemäß Anspruch 9, wobei:
die Heißgetränke Kaffee oder Tee sind; und/oder
die Kaltgetränke kohlensäurehaltige Erfrischungsgetränke sind.

11. Getränkeabgabevorrichtung (100) gemäß Anspruch 7, wobei die Kartusche (222) ferner ein Identifikationssignal umfasst, um eine Art der abgebenden Kartusche (222) zu identifizieren, sodass der Revolverkopf (104) die Kartusche (222) an die entsprechende erste oder zweite Abgabestation (136, 138) schaltet; und
wobei das Identifikationssignal vorzugsweise eines oder mehrere von einem RFID-Kennzeichen, Strichcodes, Magnetstreifen, optischer Erkennung, Mikrochips und Kombinationen davon beinhaltet.

12. Getränkeabgabevorrichtung (100) gemäß Anspruch 6, ferner umfassend eine Mischvorrichtung (146), einen ersten Verdünnungsmittelstrom (142) und einen nährenden Süßstoffstrom (144), wobei der erste Verdünnungsmittelstrom (142) und der nährende Süßstoffstrom (144) in der Mischvorrichtung (146) unter Bildung eines Übertragungsmediums miteinander vermischt werden.

13. Getränkeabgabevorrichtung (100) gemäß Anspruch 12, wobei:
die Mischvorrichtung (146) eine Abgabedüse ist; und/oder
das Übertragungsmedium dazu verwendet wird, den Inhaltsstoff innerhalb jedes der Vielzahl von Speicherkammern (224, 226, 228) aus dessen Kartusche (222) zu übertragen, um ein Getränk zu bilden.

14. Getränkeabgabevorrichtung (100) gemäß Anspruch 12, ferner umfassend einen zweiten Verdünnungsmittelstrom (150), der aus dem ersten Verdünnungsmittelstrom (142) abzweigt, wobei der zweite Verdünnungsmittelstrom (142) den Inhaltsstoff innerhalb jedes der Vielzahl von Speicherkammern (224, 226, 228) aus der Kartusche (222) in einen Becher überträgt;
wobei sich das Übertragungsmedium vorzugsweise mit dem zweiten Verdünnungsmittelstrom (150) in dem Becher vermischt, um ein Getränk zu bilden.

15. Getränkeabgabevorrichtung (100) gemäß Anspruch 6, wobei die Speicherkammern (224, 226, 228) der Kartusche (222) sowohl in Reihe als auch parallel angeordnet sind; und/oder
ferner umfassend eine Vielzahl von in Reihe angeordneten Kartuschen (222).

## Revendications

1. Cartouche (222) à utiliser dans un distributeur de boissons (100), **caractérisé en ce que** la cartouche (222) comprend :
une pluralité de compartiments de stockage (224, 226, 228) empilés en série dans un intérieur de la cartouche (222), chacun de la pluralité de compartiments de stockage (222) comportant : un orifice d'entrée, un orifice de sortie à l'opposé de l'orifice d'entrée, un ingrédient contenu entre les orifices d'entrée et de sortie, et un dispositif d'étanchéité (186) recouvrant les orifices d'entrée et de sortie ;
la cartouche (222) étant configurée pour permettre à un milieu de transfert de rompre le dispositif d'étanchéité (186) de chacun des compartiments de stockage (224, 226, 228) et d'entrer dans l'orifice d'entrée pour diluer l'ingrédient dans chacun de la pluralité de compartiments de stockage (224, 226, 228) en série et d'évacuer les ingrédients dilués hors de la cartouche (222).

2. Cartouche (222) de la revendication 1, dans laquelle :
le dispositif d'étanchéité (186) est une membrane frangible ; ou
le dispositif d'étanchéité (186) est un clapet-navette.

3. Cartouche (222) de la revendication 1, dans laquelle le milieu de transfert est un courant de diluant ;
de préférence dans laquelle une boisson en circulation formée par interaction du courant de diluant avec l'ingrédient contenu dans chacun de la pluralité de compartiments de stockage (224, 226, 228) s'écoule par l'orifice de sortie.

4. Cartouche (222) de la revendication 1, comprenant en outre une cartouche supplémentaire (322) en série ; et/ou
dans laquelle l'ingrédient dans un de la pluralité de compartiments de stockage (224, 226, 228) est choisi dans un groupe constitué par : un sirop de maïs à haute teneur en fructose, un édulcorant non nutritif, des arômes artificiels, des acides, des arômes naturels, et les mélanges de ceux-ci ; et/ou
dans laquelle la pluralité de compartiments de stockage (224, 226, 228) sont séparés par des cloisons internes.

5. Cartouche (222) de la revendication 1, comprenant en outre un signal d'identification pour identifier un type de boisson en train d'être distribuée ;
dans laquelle le signal d'identification comporte de préférence un ou plusieurs éléments parmi une étiquette RFID, des codes à barres, des bandes magnétiques, une reconnaissance optique, des micropuces, et les combinaisons de ceux-ci.

6. Distributeur de boissons (100) comprenant :
une cartouche (222) selon la revendication 1, dans laquelle la pluralité de compartiments de stockage (224, 226, 228) sont empilés les uns au-dessus des autres ;
un barillet (104) comportant un premier poste (106) pour distribuer la cartouche (222) ;
une première tête de distribution (114) ; et
une deuxième tête de distribution (116) adjacente à la première tête de distribution (114) ;
dans lequel les première et deuxième têtes de distribution (114, 116) sont agencées et configurées pour se déplacer latéralement de telle sorte qu'une des première et deuxième têtes de distribution (114, 116) est positionnée au-dessus du premier poste de distribution (106) pour une distribution à partir de celui-ci.

7. Distributeur de boissons (100) de la revendication 6, comprenant en outre un deuxième poste de distribution (138) .

8. Distributeur de boissons (100) de la revendication 7, dans lequel la première tête de distribution (114a) est positionnée au-dessus du premier poste de distribution (136) pour une distribution à partir de celui-ci, et la deuxième tête de distribution (116a) est positionnée au-dessus du deuxième poste de distribution (138) pour une distribution à partir de celui-ci.

9. Distributeur de boissons (100) de la revendication 7, dans lequel la première tête de distribution (114) distribue des boissons chaudes et la deuxième tête de distribution (116) distribue des boissons froides.

10. Distributeur de boissons (100) de la revendication 9, dans lequel :
les boissons chaudes sont du café ou du thé ; et/ou
les boissons froides sont des boissons gazeuses rafraîchissantes.

11. Distributeur de boissons (100) de la revendication 7, dans lequel la cartouche (222) comprend en outre un signal d'identification pour identifier un type de cartouche (222) en train d'être distribuée, de telle sorte que le barillet (104) pointe la cartouche (222) sur le premier ou le deuxième poste de distribution correspondant (136, 138) ; et
dans lequel le signal d'identification comporte de préférence un ou plusieurs éléments parmi une étiquette RFID, des codes à barres, des bandes magnétiques, une reconnaissance optique, des micropuces, et les combinaisons de ceux-ci.

12. Distributeur de boissons (100) de la revendication 6, comprenant en outre un dispositif de mélange (146), un premier courant de diluant (142) et un courant d'édulcorant nutritif (144), dans lequel le premier courant de diluant (142) et le courant d'édulcorant nutritif (144) sont mélangés dans le dispositif de mélange (146) pour former un milieu de transfert.

13. Distributeur de boissons (100) de la revendication 12, dans lequel :
le dispositif de mélange (146) est une buse de distribution ; et/ou
le milieu de transfert est utilisé pour transférer l'ingrédient à l'intérieur de chacun de la pluralité de compartiments de stockage (224, 226, 228) hors de la cartouche (222) de celui-ci pour former une boisson.

14. Distributeur de boissons (100) de la revendication 12, comprenant en outre un deuxième courant de diluant (150) se séparant du premier courant de diluant (142), le deuxième courant de diluant (142) transférant l'ingrédient à l'intérieur de chacun de la pluralité de compartiments de stockage (224, 226, 228) hors de la cartouche (222) dans une tasse ;
dans lequel le milieu de transfert se mélange de préférence avec le deuxième courant de diluant (150) dans la tasse pour former une boisson.

15. Distributeur de boissons (100) de la revendication 6, dans lequel les compartiments de stockage (224, 226, 228) de la cartouche (222) sont positionnés à la fois en série et en parallèle ; et/ou
comprenant en outre une pluralité de cartouches (222) positionnées en série.
